(19) Europäisches Patentamt
European Patent Office
Office européen des brevets

(11) EP 4 499 728 B1

(12) EUROPEAN PATENT SPECIFICATION

(45) Date of publication and mention of the grant of the patent:
**24.12.2025 Bulletin 2025/52**

(21) Application number: **23718955.0**

(22) Date of filing: **29.03.2023**

(51) International Patent Classification (IPC):
***C08G 63/91*** *(2006.01)* ***C08L 67/04*** *(2006.01)*

(52) Cooperative Patent Classification (CPC):
(C-Sets available)
**C08G 63/912; C08L 67/04** (Cont.)

(86) International application number:
**PCT/US2023/065086**

(87) International publication number:
**WO 2023/192896 (05.10.2023 Gazette 2023/40)**

# (54) HYPERBRANCHED POLY(MESO-LACTIDE) RESIN COMPOSITIONS

HYPERVERZWEIGTE POLY(MESO-LACTID)-HARZZUSAMMENSETZUNGEN

COMPOSITIONS DE RÉSINE DE POLY(MÉSO-LACTIDE) HYPERRAMIFIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.03.2022 US 202263325206 P**

(43) Date of publication of application:
**05.02.2025 Bulletin 2025/06**

(73) Proprietor: **NatureWorks LLC**
**Plymouth, MN 55447 (US)**

(72) Inventors:
- **POPESCU, Patricia America Nancy**
  **Plymouth, Minnesota 55447 (US)**
- **RANDALL, Jed Richard**
  **Plymouth, Minnesota 55447 (US)**
- **PIERSON, Ian Mark**
  **Plymouth, Minnesota 55447 (US)**
- **HOSSIENY, Nemat**
  **Plymouth, Minnesota 55447 (US)**
- **BERSCHEID, Robert John**
  **Plymouth, Minnesota 55447 (US)**
- **ANDERSON, Krag Ellis**
  **Plymouth, Minnesota 55447 (US)**
- **FLODQUIST, Marc Harris**
  **Plymouth, Minnesota 55447 (US)**

(74) Representative: **Cabinet Beau de Loménie**
**103, rue de Grenelle**
**75340 Paris Cedex 07 (FR)**

(56) References cited:
**WO-A1-2019/152264**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/04, C08L 67/04**

## Description

This invention relates to highly branched poly(meso-lactide) compositions.

Polylactide resins are thermoplastics that are melt-processed into a variety of end-use products. The adoption of polylactide resins into certain applications has been held back due to difficulties in melt-processing the material. Polylactide resins tend to have narrow processing windows and low melt strengths, which makes them difficult to use at industrial scale in some applications.

Melt strength can be increased by branching the polylactide resin. Various branching methods have been described before. These include, for example, copolymerizing lactide with an epoxidized fat or oil as described in U. S. Patent No. 5,359,206, or with a bicyclic lactone comonomer, as described in WO 2002/100921A. Polyfunctional initiators have been used in lactide polymerization processes as described in US Patent Nos. 5,210,108 and 5,225,521, GB 2277324, and EP 632 081. Epoxy-functional acrylate polymers have been used to branch polylactide resins, as described in WO 2006/002372.

Polylactide resins have been treated with linear peroxides, as described in US Patent Nos. 5,594,095 and 5,798,435. This branching reaction is difficult to control and produces a substantial quantity of crosslinked gels. These gels create various problems when the polylactide is melt-processed. Branching with a combination of triallyl isocyanurate (TAIC) and dicumyl peroxide, as described by Yang et al. in "Thermal and Mechanical Properties of Chemical Crosslinked Polylactide (PLA)", Polymer Testing 27 (2008) 957-963, also leads to very high gel fractions. Cyclic peroxides have been described as branching agents for polylactide resins in US Patent No. 8,334,348. These are very inefficient with only small increases in weight average molecular weight ($M_w$) being obtained.

WO 2019/152264 describes hyperbranched polylactide resins formed by treating a linear polylactide with a combination of a polyene compound such as TAIC with certain cyclic peroxides. This combination of branching agents overcomes the poor performance of cyclic peroxides by themselves, and also produces hyperbranched products that exhibit fewer gels than the combination of TAIC and dicumyl peroxide. However, gel contents frequently are still too high for the hyperbranched polymer to be useful in some film, sheet, and fiber applications, which can be quite sensitive to the presence of gels.

The invention is in one aspect a method for making a branched polylactide composition, comprising the steps of

I. forming a molten mixture of:

i) at least one starting linear poly(meso-lactide), the poly(meso-lactide) being a polymer containing at least 90 weight percent lactide units, of which lactide units 80% to 100% are polymerized meso-lactide and 0% to 20% are polymerized L-lactide and/or D-lactide; the at least one starting linear poly(meso-lactide) having a relative viscosity of at least 2.0, an absolute weight average molecular weight ($M_w$) of at least 100,000 g/mol, and an absolute Z-average molecular weight ($M_z$) of at least 150,000 g/mol and at most 400,000 g/mol; and
ii) 0.025 to 0.5 weight percent, based on the weight of component i), of at least one polyene compound, the polyene compound having 2 to 6 vinyl groups and an equivalent weight per vinyl group of up to 500; and
iii) 0.001 to 0.2 weight percent, based on the weight of component i), of at least one free radical initiator; and

II. reacting the molten mixture at a temperature sufficient to decompose component iii) and branch at least a portion of the linear poly(meso-lactide) resins to produce a branched poly(meso-lactide) having an absolute Z-average molecular weight of at least 2,000,000 g/mol and a gel number of less than 25,000 as measured in a 309.7 $cm^2$ (48 $in^2$), 0.2 mm (8 mil) thick sheet of the branched poly(meso-lactide).

The branching reaction has been found to be unexpectedly facile; the poly(meso-lactide) branches rapidly and easily. The branched product exhibits exceptional melt strength (as indicated by tan $\delta$ values as measured using the procedure described hereinbelow), comparable or even better than highly branched semi-crystalline polylactide grades. By a "semi-crystalline grade", it is meant the PLA contains greater than 5 J/g of crystallites, and more preferably at least 15 J/g of crystallites, after being heated at 110°C in air for one hour. This melt strength is accompanied by a surprisingly low viscosity, which is significantly lower than that of a branched semi-crystalline polylactide grade that has similar melt strength characteristics. Gelling is sharply reduced compared to that seen in branched semi-crystalline grades of polylactide that exhibit similar melt strengths. The combination of melt strength, viscosity, and low gel content render the branched poly(meso-lactide) of the invention useful in a wide range of melt-processing applications, notably film, sheet, and fiber manufacturing operations in which low gel content is required. This combination of low melt viscosity and high melt strength allows for wider processing windows.

Accordingly, the invention is also a branched poly(meso-lactide), the poly(meso-lactide) being a copolymer of 80% to 100% (by weight) meso-lactide and 0% to 20% of L-lactide and/or D-lactide, the branched poly(meso-lactide) having an absolute $M_w$ of at least 350,000 g/mol, a polydispersity of at least 4, a branching number ($B_n$) of 5 to 8, an

absolute $M_z$ of at least 2,000,000 g/mol, and a gel number of less than 20,000 as measured in a 309.7 $cm^2$ (48 $in^2$), 0.2 mm (8 mil) thick sheet of the branched poly(meso-lactide).

The branched polylactide composition may be used by itself in a melt-processing operation. However, it is often convenient to dilute the branched polylactide by melt-blending it with another polymer, in particular another linear polylactide resin, to form a let-down composition that is melt-processed. The let-down compositions exhibit the desired attributes of low melt viscosity and increased melt strength.

Thus, in yet another aspect, the invention is a polylactide composition comprising a) a branched poly(meso-lactide) of the invention and b) at least one linear polylactide.

Component i) is a linear poly (meso-lactide). For the purposes of this invention, the term a "poly(meso-lactide)" is a homopolymer of meso-lactide or a copolymer of a lactide mixture that includes at least 80 weight-%, preferably at least 85%, or at least 90% meso-lactide and, correspondingly, up to 20%, preferably up to 15%, or up to 10% of L- and/or D-lactide. The polymerized lactide constitutes at least 90%, preferably at least 95%, or at least 98%, of the total weight of the linear poly(meso-lactide). Each molecule of lactide produces two adjacent lactic units in the polymer chain. Lactic units contain a chiral carbon atom and therefore exist in two enantiomeric forms, the "L" (or "S") enantiomer and the "D" (or "R") enantiomer. The ratio of L-lactic repeating units to D-lactic repeating units in the poly(meso-lactide) may be 60:40 to 40:60, 57.5:42.5 to 42.5:57.5, or 55:45 to 45:55. The linear poly(meso-lactide) may be heterotactic, syndiotactic, or partially heterotactic and partially syndiotactic. The average length of blocks of L-lactic units and D-lactic units is generally less than 2.0 and may be less than 1.75 or less than 1.5, to as low as 1.0. The distribution of L- and D-lactic units can be ascertained using proton NMR methods. The linear poly(meso-lactide) is an amorphous grade, which forms fewer than 5 J/g of crystallites after being heated at 110°C in air for one hour.

By "linear" it is meant that the poly(meso-lactide) contains no branches that have 6 or more carbon atoms. Side-chains or pendant groups having fewer than 6 carbon atoms (including pendant methyl groups on each lactic unit of the poly(meso-lactide) are not considered as "branches" for purposes of this invention and are not counted toward the branching number $B_n$ of the starting or branched poly(meso-lactide).

The poly(meso-lactide) may contain minor amounts, such as up to 10%, preferably up to 5%, and more preferably up to 2% by weight, based on total polymer weight, of residues of an initiator compound and/or repeating units derived from other monomers that are copolymerizable with lactide. Suitable such initiators include compounds such as water, lactic acid, other monoalcohols, glycol ethers, and other polyhydroxy compounds of various types (such as ethylene glycol, propylene glycol, polyethylene glycol, polypropylene glycol, and the like). Examples of copolymerizable monomers include glycolic acid; 2-hydroxybutyric acid and other $\alpha$-hydroxyacids which can condense with lactic acid and generate cyclic diesters therewith; alkylene oxides (including ethylene oxide, propylene oxide, butylene oxide, tetramethylene oxide, and the like); cyclic lactones; and cyclic carbonates. The poly(meso-lactide) most preferably is essentially devoid of such repeating units derived from other monomers.

The poly(meso-lactide) can be prepared by polymerizing meso-lactide or a mixture of meso-lactide and L- and/or D-lactide as described above in the presence of a polymerization catalyst as described in, for example, U. S. Patent Nos. 5,247,059, 5,258,488 and 5,274,073. This preferred polymerization process typically includes a devolatilization step during which the free lactide content of the polymer is reduced, preferably to less than 1% by weight, less than 0.5% by weight, less than 0.3% by weight, and especially less than 0.2% by weight. The polymerization catalyst is preferably deactivated or removed from the poly(meso-lactide).

The poly(meso-lactide) may include virgin materials and/or recycled post-industrial or post-consumer resin(s). The starting linear poly(meso-lactide) or mixture of poly(meso-lactide)s has a relative viscosity of at least 2.0. The relative viscosity may be at least 2.25, at least 2.5, or at least 2.75 and in some embodiments is up to 3.0. Relative viscosity is the ratio of the viscosity of a 1% wt/vol solution of the poly(meso-lactide) in chloroform to that of a chloroform standard, as measured using a capillary viscometer at 30°C.

The linear poly(meso-lactide) has an absolute weight average molecular weight ($M_w$) of at least 100,000 g/mol. The absolute Mw may be at least 125,000 g/mol or at least 150,000 g/mol, and may be up to, for example, 200,000 g/mol. The linear (meso-lactide) also has an absolute Z-average molecular weight ($M_z$) of at least 150,000 g/mol, preferably at least 200,000 g/mol, and at most 400,000 g/mol. Absolute molecular weights are determined by gel permeation chromatography/size exclusion chromatography using triple detection (light scattering, differential viscometer, and refractive index detection).

The linear poly(meso-lactide) may have hydroxyl end groups, carboxyl end groups, or both hydroxyl and carboxyl end groups.

The polyene compound(s) contain(s) 2 to 6 vinyl group per molecule. A "vinyl" group for purposes of this invention is a -CHR=CHR group, where each R is independently hydrogen or linear, branched or cyclic alkyl having up to 6 carbon atoms, or phenyl. The vinyl groups preferably are allylic, i.e., part of a larger group having the form $-CH_2-CHR=CHR$, and/or are enones i.e., part of a larger group having the form -C(O)-CHR=CHR. R is preferably hydrogen in each case.

In some embodiments, the polyene compound(s) each (if more than one) contains 2 to 4 vinyl groups per molecule and in particular embodiments contains 2 or 3 vinyl groups per molecule.

Each polyene compound may have an equivalent weight per vinyl group of up to 500. This equivalent weight may be at least 50, at least 70, or at least 90 and up to 400, up to 300, or up to 250 gram/equivalent.

Examples of suitable polyene compounds include, for example, various compounds corresponding to esters of acrylic acid and a polyol. These include, for example, 1,4-butanediol diacrylate, 1,5-pentanediol diacrylate, 1,6-hexanediol diacrylate, neopentyl glycol diacrylate, diethylene glycol diacrylate, triethylene glycol diacrylate, tetraethylene glycol diacrylate, polyethylene glycol diacrylate, dipropylene glycol diacrylate, tripropylene glycol diacrylate, cyclohexane dimethanol diacrylate, alkoxylated hexanediol diacrylate, propoxylated neopentyl glycol diacrylate, trimethylolpropane triacrylate, ethoxylated trimethylolpropane triacrylate, propoxylated trimethylolpropane triacrylate, glycerine triacrylate, ethyloxylated and/or propoxylated glycerine triacrylate, pentaerythritol di-, tri-, or tetraacrylate, erythritol di-, tri-, or tetraacrylate, acrylated polyester oligomer, bisphenol A diacrylate, acrylated bisphenol A diglycidyl ether, ethyoxylated bisphenol A diacrylate, and the like. Other suitable acrylate compounds include tris(2-hydroxyethyl)isocyanurate triacrylate and acrylated urethane oligomers.

Other suitable polyene compounds are compounds having two or more allylic groups. Examples of these include polyallyl ethers of a polyol and polyallyl esters of a polycarboxylic acid.

Suitable polyallyl ethers include, for example, 1,4-butanediol diallyl ether, 1,5-pentanediol diallyl ether, 1,6-hexanediol diallyl ether, neopentyl glycol diallyl ether, diethylene glycol diallyl ether, triethylene glycol diallyl ether, tetraethylene glycol diallyl ether, polyethylene glycol diallyl ether, dipropylene glycol diallyl ether, tripropylene glycol diallyl ether, cyclohexane dimethanol diallyl ether, alkoxylated hexanediol diallyl ether, propoxylated neopentyl glycol diallyl ether, trimethylolpropane di- or triallyl ether, ethoxylated trimethylolpropane di- or triallyl ether, propoxylated trimethylolpropane di- or triallyl ether, glycerine di- or triallyl ether, ethyloxylated and/or propoxylated glycerine di- or triallyl ether, pentaerythritol di-, tri-, or tetraallyl ether, erythritol di-, tri-, or tetraallyl ether, acrylated polyester oligomer, bisphenol A diacrylate, acrylated bisphenol A diglycidylether, ethyoxylated bisphenol A diallyl ether, and the like.

Examples of suitable polyallyl esters include diallyl maleate, diallyl fumarate, diallyl phthalate, diallyl terephthalate, diallyl succinate, di- or triallyl citrate, and the like.

Other useful polyene compounds include triallyl cyanurate and triallyl isocyanurate (TAIC).

The free radical initiator is one or more compounds that thermally react and/or decompose under the conditions of step b) of the process to produce free radicals. The free radical initiator may have a half-life of at most 5 minutes, preferably at most 120 seconds, at 210°C. The cyclic peroxide may a half-life of 5 to 120 seconds or 10 to 60 seconds at 210°C.

Useful free radical initiators include, for example, 1) acyl peroxides such as acetyl or benzoyl peroxides, 2) alkyl peroxides such as cumyl, dicumyl, lauroyl, or t-butyl peroxides, 3) hydroperoxides such as t-butyl or cumyl hydroperoxides, 4) peresters such t-butyl perbenzoate, 5) other organic peroxides including acyl alkylsulfonyl peroxides, dialkyl peroxydicarbonates, diperoxyketals, or ketone peroxides, 6) cyclic ketones and 1,2,4-trioxepanes as described, for example, in US Patent No. 8,334,348, 7) azide compounds, 8) various tetrazines, 9) various azo compounds, 10) various persulfate compounds such as potassium persulfate, and 11) cyclic peroxides. Cyclic peroxides are a preferred type.

The preferred cyclic peroxides are characterized as having at least one cyclic structure in which one or more peroxide (-O-O-) linkages form part of a ring. Among the suitable cyclic peroxides (component iii) are cyclic ketones and 1,2,4-trioxepanes as described, for example, in US Patent No. 8,334,348.

Among the useful cyclic ketones are those having any of the structures I-III:

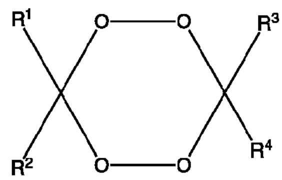
(I)

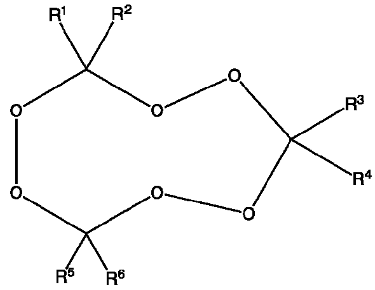
(II)

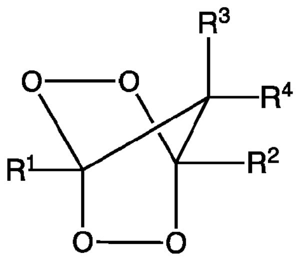

(III)

wherein each of $R^1$-$R^6$ are independently selected from the group consisting of hydrogen, $C_{1-20}$ alkyl, $C_{3-20}$ cycloalkyl, $C_{6-20}$ aryl, $C_{7-20}$ aralkyl, and $C_{7-20}$ alkaryl, any of which may optionally be substituted with one or more groups selected from hydroxyl, alkoxy, linear or branched alkyl, aryloxy, ester, carboxy, nitrile, and amido. The cyclic ketone peroxides preferably contain only carbon, hydrogen and oxygen atoms.

Suitable 1,2,4-trioxepanes (1,2,4-cycloheptanes) include those having the structure:

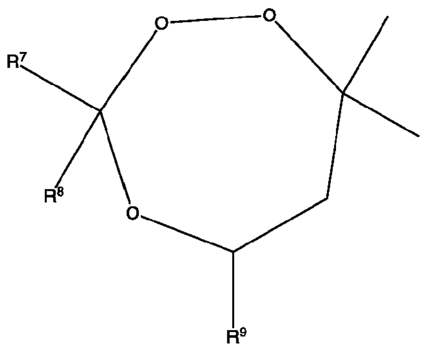

Wherein $R^7$, $R^8$, and $R^9$ are independently hydrogen or hydrocarbyl that may be substituted with one or more groups selected from hydroxyl, alkoxy, linear, or branched alkyl, aryloxy, ester, carboxy, nitrile, and amido and provided that any two of $R^7$, $R^8$, and $R^9$ may together form a divalent moiety that forms a ring structure with the intervening atoms of the trioxepane ring.

In some embodiments, $R^7$ and $R^9$ each independently may be $C_{1-6}$ alkyl with methyl and ethyl being preferred. $R^8$ in some embodiments may be hydrogen, methyl, ethyl, isopropyl, isobutyl, t-butyl, amyl, iso-amyl, cyclohexyl, phenyl, $CH_3C(O)CH_2$-, $C_2H_5OC(O)CH_2$-, $HOC(CH_3)_2CH_2$-, or

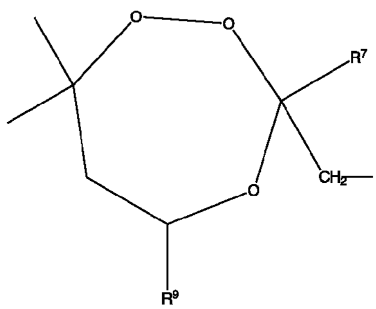

.

In other embodiments $R^7$ and $R^8$ together with the carbon atom to which they are bonded form a cyclohexane ring.

Specific cyclic peroxides include 3,6,9-triethyl-3,6,9-trimethyl-1,4,7-triperoxononane, which is available as Trigonox® 301 from Akzo Nobel; 3,3,5,7,7-pentamethyl-1,2,4-trioxepane, which is available as Trigonox® 311 from Akzo Nobel; and 3-ethyl-3,5,7,7-tetramethyl-1,2,4-trioxepane, which is available as MEK-TP from Akzo Nobel.

A branched poly(meso-lactide) composition is made by forming a molten mixture of components i), ii), and iii) and reacting the molten mixture at a temperature sufficient to decompose component iii) and branch at least a portion of the linear poly(meso-lactide).

The molten mixture contains heat-softened linear poly(meso-lactide) and melted (if not a liquid at room temperature) polyene compound. The free radical initiator preferably is dissolved in one or more of the other components of the molten mixture (i.e., into one or both of components i) and ii) and/or is dissolved in a solvent that is also a solvent for with the poly(meso-lactide).

The order of mixing components i), ii), and iii) is not especially critical except that they should be mixed before or at the same time the cyclic peroxide compound is brought to a temperature at which it has a half-life of 5 minutes or less. Thus, for example, all three of components i), ii), and iii) can be mixed simultaneously, preferably while component i) is in the solid state. For example, a dry blend of components i), ii), and iii) can be formed, which dry blend is then heated to melt the poly(meso-lactide) and (if necessary) the polyene compound and perform the reaction.

Components i) and ii) instead can be mixed and optionally melted together before adding component iii). Alternatively, component iii) and all or a portion of component i) can be mixed first, with or without first melting the starting poly(meso-lactide), and then combined with component ii) and any remaining amount of component i) and brought to the reaction temperature. For example, component iii) can be absorbed onto solid poly(meso-lactide) particles to form a concentrate (as described in US Patent No. 9,527,967) which is then added to component ii) and more component i) to form the molten mixture. It is also possible to first combine components ii) and iii) and then to blend the resulting combination with component i).

The amount of component ii) provided to the molten mixture is 0.025 to 0.5 weight percent, based on the weight of the starting linear poly(meso-lactide). A preferred lower amount is 0.05 or 0.075 weight percent on the same basis, and a preferred upper amount is 0.3 or 0.25 weight percent, again on the same basis.

The amount of component iii) provided to the molten mixture is 0.001 to 0.2 weight percent, based on the weight of the starting linear poly(meso-lactide). A preferred lower amount is 0.01 or 0.02 weight percent on the same basis, and a preferred upper amount is 0.15, 0.1, or 0.075 weight percent, again on the same basis.

The molten mixture is reacted at a temperature sufficient to decompose component iii) and branch at least a portion of the linear poly(meso-lactide). A suitable reaction temperature is at least 150°C, preferably at least 170°C, at least 190°C, or at least 200°. The reaction temperature may be, for example, up to 260°C, but is preferably lower to reduce thermal degradation of the poly(meso-lactide). An upper temperature of 235°C or up to 225°C is preferred. The reaction temperature may be a temperature at which the cyclic peroxide has a half-life of 5 to 120 seconds, preferably 10 to 60 seconds.

The time required to perform the reaction (i.e., the period of time during which the molten mixture is subjected to the reaction temperature) may be, for example, 0.25 to 60 minutes. In general, the reaction time is at least equal to the half-life of the cyclic peroxide at the reaction temperature and may be at least 2 times or at least 3 times that half-life at the reaction temperature. A preferred reaction time is 0.25 to 10 minutes, and a more preferred reaction time is 15 to 60 seconds.

A convenient way of performing the branching reaction is to process the ingredients through a kneader or an extruder. For example, the ingredients can be added together at the main inlet port and/or in separate ports, and heated together in the extruder to form the molten mixture. Tthe molten mixture is then brought to the reaction temperature, and maintained at the reaction temperature for the requisite time before being cooled by passing it through one or more cooling zones and/or removing it from the outlet end of the extruder.

A lubricant or other extrusion processing aid may be present during the branching reaction, particularly if performed in a kneader or extruder. An inhibitor and/or retarder for the free radical initiator may be present during the branching reaction. Examples of such inhibitors and/or retarders include quinones, quinone derivatives, sterically hindered phenols such as t-butyl catechol, butylated hydroxytoluene, and 4-methoxyphenol, and nitro- and/or nitroso derivatives of aromatic compounds.

When an extrusion process is used, the extrudate may be chilled such as by immersing it in cool water or other liquid and then chopped to form pellets that are useful in a subsequent melt-processing operation. In an integrated branching/melt processing operation, the extruder may directly or indirectly feed downstream melt-processing apparatus, in some cases without solidifying the extruded material.

The branched poly(meso-lactide) has an absolute $M_z$ of at least 2,000,000 g/mol. The $M_z$ may be at least 2,250,000 or at least 2,500,000 g/mol, and in some embodiments is up to 5,000,000 g/mol, up to 4,000,000 g/mol, or up to 3,000,000 g/mol. $M_z$ is calculated as:

$$M_z = \frac{\sum N_i M_i^3}{\sum N_i M_i^2}$$

where $M_i$ is the molecular weight of a polymer chain and $N_i$ is the number of chains of that molecular weight, the summations being across all chain molecular weights.

The branched poly(meso-lactide) may in addition have an absolute weight average molecular weight at least 200%, preferably 250% to 500%, especially 300% to 500%, of that of the starting linear poly(meso-lactide). The absolute weight average molecular weight of the branched poly(meso-lactide) may be, for example, at least 280,000 g/mol, at least 400,000 g/mol, or at least 500,000 g/mol, and may be up to, for example, 1,000,000 g/mol, up to 750,000 g/mol, or up to 650,000 g/mol.

The branched poly(meso-lactide) may have a polydispersity (absolute $M_w$/absolute $M_n$) of at least 2.5. The polydispersity may be at least 2.7, at least 3.0, at least 3.3, at least 3.5, at least 3.8, or at least 4.0. In some embodiments the polydispersity is up to 6 or up to 5.

The branched poly(meso-lactide) typically has an intrinsic viscosity between 0.8 and 1.35 times that of the starting linear poly(meso-lactide). The intrinsic viscosity may be between 0.9 and 1.15 times that of the starting linear poly(meso-lactide). In absolute terms, the intrinsic viscosity of the branched poly(meso-lactide) may be, for example, 1.1 to 1.35 dL/g, 1.1 to 1.30 dL/g, or 1.1 to 1.20 dL/g. Intrinsic viscosity ($\eta$) may be measured by using size exclusion chromatography (SEC) coupled to a viscometer. SEC is operated using tetrahydrofuran (THF) as the mobile phase and is calibrated to known polystyrene standards. Polymer concentration is calculated using a d$\eta$/dc value of 0.046 for PLA in THF.

The branched poly(meso-lactide) may have a branching number ($B_n$) of at least 3, at least 3.5, at least 4, at least 5, at least 6, or at least 7 and may be, for example, up to 12, up to 10, or up to 8. Branching number is measured using the method described in the examples of WO 2019/152264.

The branched poly(meso-lactide) is characterized by a gel number of less than 25,000, preferably less than 20,000, even more preferably less than 17,000. Gel number is measured on sheets made from the neat, branched poly(meso-lactide) or from a blend of the branched poly(meso-lactide) and a linear PLA resin that has been filtered to remove gels. In the former case, 0.2 mm (8 mil) sheets are made from the neat, branched poly(meso-lactide) using a Leistritz 3-roll-stack sheet line or equivalent apparatus. Film specimens 20.32 cm (8 inches) × (15.24 cm (6 in) (309.7 $cm^2$) are tested for the size and number distribution of gels (across a gel size of 20 to 1000 μm) using a film quality analyzer (FQA) setup from Schenk Vision (Woodbury, MN). The gel number is total number of gels in the film specimen within the size range of 20 to 1000 μm, as determined by the film quality analyzer.

When gel number is measured on sheets made from a blend of the branched poly(meso-lactide) and a linear PLA resin that has been filtered to remove gels, the branched poly(meso-lactide) and linear PLA resin are melt-blended in a twin screw extruder at a known ratio R, defined as the ratio of branched poly(meso-lactide) to the combined weight of branched poly(meso-lactide) and linear PLA. A sheet is produced from the blend as described before, and the gels measured. A control film is made of the same linear PLA resin used to let down the branched meso-lactide, and the number of gels of that film is measured. The gel number of the branched poly(meso-lactide) is determined using the relationship:

$$Gel\ Number = (Gel\ Number_{Test\ Sample} - Gel\ number_{Control})/R$$

The gel number in each instance is the number of gels of 20 to 1000 μm in size in a (309.7 $cm^2$ (48 $in^2$) specimen of an 0.2 mm (8-mil)-thick film.

The branched poly(meso-lactide) exhibits an increased melt strength compared to the unbranched starting linear poly(meso-lactide). Increased melt strength, for purposes of this invention, is indicated by a decreased tan $\delta$ value at a shear rate of 1/sec, measured as described in the following examples and/or an increased haul-off force, as determined at a haul-off speed of 5 meters/minute using a capillary rheometer, as described in the examples of WO 2019/152264. The branched polylactide may, for example, exhibit a tan $\delta$ value at 210°C of up to 3, up to 2.5, or up to 2 at a shear rate of 0.8/sec. The branched poly(meso-lactide) may exhibit a haul-off force of at least 5, at least 10, at least 15, or at least 20 cN.

The branched poly(meso-lactide) may exhibit a complex viscosity of at most 5,000 Pa·s at an angular frequency of 0.1 radian/second, at most 3,500 Pa·s at an angular frequency 1.0 radian/second, at most 2,000 Pa·s at an angular frequency of 10 radians/second, and/or at most 700 Pa·s at an angular frequency of 100 radians/second, measured at a temperature of 210°C according the method described in the examples below. An advantage of this invention is that complex viscosities are generally significantly lower than those of branched poly(L-lactide) resins that contain at most 5% D-lactic units and exhibit similar tan $\delta$ values. The lower complex viscosities allow the branched poly(meso-lactide) to be melt-processed more easily.

The branched poly(meso-lactide) can be used directly (i.e., without being combined with one or more other resins) in a variety of melt-processing operations. These melt-processing operations include, for example, extrusion foaming; melt coating; melt fiber spinning; injection molding; blow molding, injection stretch blow molding; sheet extrusion and thermoforming; film coextrusion; blown film manufacture; and the like. The compositions are particularly beneficial in applications in which high melt strength and/or high drawability are needed. These include melt coating, film and sheet extrusion, extrusion foaming, and deep draw thermoforming.

The branched poly(meso-lactide) by itself in many cases exhibit very high melt strengths, which may be in excess of what is needed for specific melt-processing operations. In addition, very highly branched compositions of the invention, such as those exhibiting $B_n$ values of 4 or greater, may exhibit somewhat reduced extensibility. This can limit their ability to be drawn at higher ratios during certain melt processing operations.

Accordingly, in some embodiments, the branched poly(meso-lactide) is let down with one or more additional polymers to form a blend that has properties which are particularly beneficial for specific melt-processing operations. The

branched polylactide composition may be let down by blending it, for example, with 0.25 to 199 parts by weight of additional resin per part by weight of branched polylactide composition. This ratio in some embodiments is 1 to 199, 3 to 99, 3 to 49, 3 to 24, 3 to 9, or 4 to 9 parts by weight of additional resin(s) per part by weight of branched polylactide composition.

The additional resin may be, for example, a linear polylactide resin (which may be an amorphous or a semi-crystalline grade), another polyester, an acrylate or methacrylate polymer or copolymer, a polyolefin, a polyether, a polyamide, or other organic polymer. A particularly preferred additional resin is a linear thermoplastic polylactide having a polydispersity ($M_w/M_n$) of less than 2.5 and a branching number of less 3.0, preferably less than 2.2. The linear thermoplastic polylactide preferably is a copolymer of at least 75% by weight L-lactide and up to 25% by weight of D- and/or meso-lactide.

The branched poly(meso-lactide) preferably is melt-blended with the additional resin. The melting blending can be performed as part of a melt-processing operation, and/or as a separate manufacturing step to produce, for example, flakes or pellets of the melt-blended material. If desired, a dry blend of particles of the branched poly(meso-lactide) and particles of the additional resin can be formed and fed into melt-processing apparatus to produce the melt blend.

The ability to form a very highly branched composition and let it down is a significant advantage. This allows smaller volumes of material to be processed under reaction conditions, thereby reducing production and allows for better control of temperature and residence time.

The branched poly(meso-lactide) generally does not engage in further cross-linking or branching reactions when melt-processed or let down (unless additional measures are taken to produce more branching). The amount of branching is set when the poly(meso-lactide) is produced, rather than during subsequent melt-processing or let-down. Therefore, it is not necessary for secondary fabricators to employ special process conditions or tight process controls as are needed in reactive extrusion processes in which branching takes place during the secondary fabrication. This leads to wider processing windows, easier processing generally, and a more consistent end product.

Still another advantage is that the let-down step can be performed under less stringent conditions, in particular at lower shear, and thus can be performed using a wider variety of types of equipment, such as a single-screw extruder. The dilution step can be incorporated into a melt-processing operation for forming the branched polylactide composition into a downstream product.

The following examples are provided to illustrate the invention, but not to limit the scope thereof. All parts and percentages are by weight unless otherwise indicated.

PMLA1 is a random copolymer of 90% meso-lactide and 10% L-lactide. It has an absolute $M_n$ of about 84,000 g/mol, an absolute $M_w$ of about 175,000 g/mol, an absolute $M_z$ of about 254,000 g/mol, and a $B_n$ of 2 (indicative of a linear polymer). Its relative viscosity is 2.88.

PMLA2 is a random copolymer of 90% meso-lactide and 10% L-lactide. It has an absolute $M_n$ of about 62,000 g/mol, an absolute $M_w$ of about 106,000 g/mol, an absolute $M_z$ of about 157,000 g/mol, and a $B_n$ of 2. Its relative viscosity is 2.06.

crPLLA1 is a random copolymer of about 2.8% meso-lactide and 97.2% L-lactide that is partially crystallized when introduced into the branching process. It has an absolute $M_n$ of about 63,000 g/mol, an absolute $M_w$ of about 118,000 g/mol, an absolute $M_z$ of about 178,000 g/mol, and a $B_n$ of 2. Its relative viscosity is 3.94.

amPLLA1 is the same copolymer as crPLLA. This copolymer is a semi-crystalline grade capable of being crystallized, but in this case has not been crystallized and so is almost entirely amorphous when introduced into the branching process.

PLLA2 is a random copolymer of about 1.4% meso-lactide and 98.6% L-lactide that is partially crystallized when introduced into the branching process. It has an absolute $M_n$ of about 38,000 g/mol, an absolute $M_w$ of about 60,000 g/mol, an absolute $M_z$ of about 87,000 g/mol, and a $B_n$ of 2. Its relative viscosity is 2.55.

PMLA1, PMLA2, crPLLA1, amPLLA1, and PLLA2 are separately branched by reaction with 0.14 parts of TAIC and 0.1 part of 3,6,9-triethyl-3,6,9-trimethyl-1,4,7-triperoxononane as follows. A commercial masterbatch (Trigonox 301-40 PLA from Nouryon) in pellet form is used containing 60% of a polylactide, 21% of a solvent (Isopar M), and 16% of the peroxide. Separately, a second masterbatch is produced containing 97% of a linear PLA resin and 3% of a 70/30 mixture of TAIC and silica. The masterbatches are let down into the starting resin using a 30-mm (44.33 L/D), 10-zone corotating twin screw extruder with a first feed zone set at 100°C, zones 2-5 set at 170°C, and zones 6-10 set at 210°C. Screw speed is 300 rpm; throughput is 40 pounds (18.18 kg) per hour; residence time is 40 seconds. The resulting branched products (designated BrPMLA1, BrPMLA2, crBrPLLA1, amBrPLLA1 and BrPLLA2, respectively) have the following characteristics:

| Product | $M_n$ (g/mol) | $M_w$ (g/mol) | $M_z$ (g/mol) | $B_n$ | $\eta_{0.1}$ (Pa·s)* | Tan $\delta$ @ 0.8 $sec^{-1*}$ |
|---|---|---|---|---|---|---|
| BrPMLA1 | 131,000 | 598,000 | 2,759,000 | 6 | 5000 | 2 |
| crBrPLLA1 | 79,000 | 372,000 | 1,749,000 | 8 | 7800 | 2 |

(continued)

| Product | $M_n$ (g/mol) | $M_w$ (g/mol) | $M_z$ (g/mol) | $B_n$ | $\eta_{0.1}$ (Pa·s)* | Tan δ @ 0.8 $sec^{-1}$* |
|---|---|---|---|---|---|---|
| amBrPLLA1 | 66,000 | 346,000 | 1,730,000 | 8 | 5457 | 2 |
| BrPLLA2 | 40,000 | 130,000 | 728,000 | 5 | 395 | 15 |
| BrPMLA2 | 82,000 | 317,000 | 1,651,000 | 4 | 589 | 5 |

*Complex viscosity and tan δ measurements are made on samples dried overnight at 48°C under vacuum. Measurements are made on the dried samples using an ARES G2 rheometer with 25-mm parallel plate fixture and a 2-mm gap. Measurements are made at 210°C at shear rates of 0.1 radians/second (complex viscosity) and 0.8 radians/second (tan δ).

The gel number of each of BrPMLA1, crBrPLLA, amBrPLLA, and BrPLLA2 are determined by separately melt-blending them with a linear PLA base resin at a 20:80 weight ratio. Sheets are produced and the number of gels determined according to the method described before, the value of R being 0.2 in each case. The base PLA resin into which the branched products are let down has a gel number of 871. Results are as follows:

| Branched Resin | Total Gels | Base PLA resin gels | Branched PLA gels | Gel Number* |
|---|---|---|---|---|
| BrPMLA1 | 3908 | 871 | 3037 | 15,185 |
| crBrPLLA1 | 10616 | 871 | 9845 | 49,225 |
| amBrPLLA1 | 6070 | 871 | 5199 | 26,095 |
| BrPLLA2 | 1625 | 871 | 752 | 3,760 |
| BrPMLA2 | 1885 | 871 | 1014 | 5,070 |

*Number of gels per 48 $in^2$ (307.23 $cm^2$) of 8-mil-thick (0.2 mm) film.

PMLA has a much lower relative viscosity than PLLA, at similar molecular weights. Equivalently, PMLA has a much higher molecular weight than PLLA at equivalent relative viscosity.

PLLA1, whether used in the crystalline or amorphous form, is branched to produce a material that has a tan δ value (and therefore melt strength) equivalent to that of the branched PMLA1. However, the viscosity of the branched PLLA1 is about 10 to almost 60% higher than that of BrPMLA1, and the number of gels is 70 to over 300% higher. It is noted that crystallinity of the PLLA at the start of the branching process affects both the viscosity and gel number. PMLA is entirely amorphous and cannot be crystallized.

PLLA2, despite its much higher relative viscosity when compared to PMLA2, branches to produce a material that has a tan δ three times higher (and melt strength three times lower) than that of BrPMLA2.

**Claims**

**1.** A method for making a branched polylactide composition, comprising the steps of

I. forming a molten mixture of:

i) at least one starting linear poly(meso-lactide), the at least one poly(meso-lactide) being a polymer containing at least 90 weight percent lactide units of which lactide units 80 to 100% are polymerized meso-lactide and 0 to 20% are polymerized L-lactide and/or D-lactide units, the at least one starting linear poly(meso-lactide) having a relative viscosity of at least 2.0, an absolute weight average molecular weight ($M_w$) of at least 100,000 g/mol, and an absolute Z-average molecular weight ($M_z$) of at least 150,000 g/mol and at most 400,000 g/mol and;
ii) 0.025 to 0.5 weight percent, based on the weight of component i), of at least one polyene compound, the polyene compound having 2 to 6 vinyl groups and an equivalent weight per vinyl group of up to 500; and
iii) 0.001 to 0.2 weight percent, based on the weight of component i), of at least one free radical initiator; and

II. reacting the molten mixture at a temperature sufficient to decompose component iii) and branch at least a portion of the linear poly(meso-lactide) to produce a branched poly(meso-lactide) having an absolute Z-average

molecular weight of at least 2,000,000 g/mol and a gel number of less than 25,000 as measured in a 48 $in^2$ (309.7 $cm^2$), 8 mil (0.2 mm) thick sheet of the branched poly(meso-lactide);

wherein the relative viscosity, the absolute weight average molecular weight ($M_w$) and the absolute Z-average molecular weight ($M_z$) are measured as indicated in the description.

2. The method of claim 1 wherein the at least one poly(meso-lactide) has a relative viscosity of at least 2.5, an absolute weight average molecular weight ($M_w$) of at least 140,000 g/mol, and an absolute Z-average molecular weight ($M_z$) of at least 200,000 g/mol and at most 400,000 g/mol.

3. The method of claim 1 or 2 wherein the polyene compound is one or more of 1,4-butanediol diacrylate, 1,5-pentanediol diacrylate, 1,6-hexanediol diacrylate, neopentyl glycol diacrylate, diethylene glycol diacrylate, triethylene glycol diacrylate, tetraethylene glycol diacrylate, polyethylene glycol diacrylate, dipropylene glycol diacrylate, tripropylene glycol diacrylate, cyclohexane dimethanol diacrylate, alkoxylated hexanediol diacrylate, neopentyl glycol diacrylate, propoxylated neopentyl glycol diacrylate, trimethylolpropane triacrylate. ethoxylated trimethylolpropane triacrylate, propoxylated trimethylolpropane triacrylate, glycerine triacrylate, ethyloxylated and/or propoxylated glycerine triacrylate, pentaerythritol di-, tri-, or tetraacrylate, erythritol di-, tri-, or tetraacrylate, acrylated polyester oligomer, bisphenol A diacrylate, acrylated bisphenol A diglycidylether, ethyoxylated bisphenol A diacrylate, tris(2-hydroxyethyl)isocyanurate triacrylate, an acrylated urethane oligomer, 1,4-butanediol diallyl ether, 1,5-pentanediol diallyl ether, 1,6-hexanediol diallyl ether, neopentyl glycol diallyl ether, diethylene glycol diallyl ether, triethylene glycol diallyl ether, tetraethylene glycol diallyl ether, polyethylene glycol diallyl ether, dipropylene glycol diallyl ether, tripropylene glycol diallyl ether, cyclohexane dimethanol diallyl ether, alkoxylated hexanediol diallyl ether, neopentyl glycol diallyl ether, propoxylated neopentyl glycol diallyl ether, trimethylolpropane di- or triallyl ether, ethoxylated trimethylolpropane di- or triallyl ether, propoxylated trimethylolpropane di- or triallyl ether, glycerine di- or triallyl ether, ethyloxylated and/or propoxylated glycerine di- or triallyl ether, pentaerythritol di-, tri-, or tetraallyl ether, erythritol di-, tri-, or tetraallyl ether, acrylated polyester oligomer, bisphenol A diacrylate, acrylated bisphenol A diglycidylether, ethyoxylated bisphenol A diallyl ether, include diallyl maleate, diallyl fumarate, diallyl phthalate, diallyl terephthalate, diallyl succinate, di- or triallyl citrate, triallyl cyanurate, and triallyl isocyanurate.

4. The method of any of claims 1-3 wherein the free radical initiator includes at least one cyclic peroxide.

5. The method of any preceding claim wherein the amount of component ii) in the molten mixture is 0.075 to 0.25 weight percent, based on the weight of the at least one starting linear poly(meso-lactide) and the amount of component iii) in the molten mixture is 0.02 to 0.075 weight percent based on the weight of the starting linear poly(meso-lactide).

6. The method of any preceding claim wherein step II is performed at a temperature of 150°C to 235°C for a period of 15 to 60 seconds.

7. A branched poly(meso-lactide), the poly(meso-lactide) being a copolymer of 80 to 100% meso-lactide and 0 to 20% of L-lactide and/or D-lactide, the branched poly(meso-lactide) having an absolute weight average molecular weight ($M_w$) of at least 300,000 g/mol, a polydispersity of at least 3.5, a branching number ($B_n$) of 5 to 8, an absolute Z-average molecular weight ($M_z$) of at least 1,500,000 g/mol, and a gel number of less than 20,000 as measured in a 48 $in^2$ (309.7 $cm^2$), 8 mil (0.2 mm) thick sheet of the branched poly(meso-lactide);
wherein the absolute weight average molecular weight ($M_w$), the branching number ($B_n$), the absolute Z-average molecular weight ($M_z$) and the gel number are measured as indicated in the description.

8. The branched poly(meso-lactide) of claim 7 which has an absolute $M_w$ of at least 350,000 g/mol, a polydispersity of at least 4, a branching number ($B_n$) of 5 to 8, an absolute $M_z$ of at least 2,000,000 g/mol, and a gel number of less than 20,000 as measured in a 48 $in^2$ (309.7 $cm^2$), 8 mil (0.2 mm) thick sheet of the branched poly(meso-lactide).

9. The branched poly(meso-lactide) of claim 7 which has an absolute $M_w$ of at least 500,000 g/mol, a polydispersity of at least 4, a branching number ($B_n$) of 5 to 8, an absolute $M_z$ of at least 2,500,000 g/mol, and a gel number of less than 20,000 as measured in a 48 $in^2$ (309.7 $cm^2$), 8 mil (0.2 mm) thick sheet of the branched poly(meso-lactide).

10. A polylactide composition comprising a) a branched poly(meso-lactide) of any of claims 7-9 and b) at least one linear polylactide.

11. The polylactide composition of claim 10 comprising 5 to 50% by weight of a) based on the combined weights of a) and

b), and b) 50 to 95% by weight of b), based on the combined weights of a) and b).

## Patentansprüche

1. Verfahren zur Herstellung einer verzweigten Polylactidzusammensetzung, umfassend die folgenden Schritte

    I. Bilden einer geschmolzenen Mischung aus:

    i) mindestens einem linearen Poly(meso-lactid)-Ausgangsstoff, wobei das mindestens eine Poly(meso-lactid) ein Polymer ist, das mindestens 90 Gewichtsprozent Lactid-Einheiten enthält, von denen 80 bis 100 % polymerisiertes Meso-lactid und 0 bis 20 % polymerisierte L-lactid- und/oder D-lactid-Einheiten sind, wobei das mindestens eine lineare Poly(meso-lactid)-Ausgangsprodukt eine relative Viskosität von mindestens 2,0, ein absolutes gewichtsmittleres Molekulargewicht (Mw) von mindestens 100.000 g/mol und ein absolutes Z-mittleres Molekulargewicht (Mz) von mindestens 150.000 g/mol und höchstens 400.000 g/mol aufweist; und
    ii) 0,025 bis 0,5 Gewichtsprozent, bezogen auf das Gewicht der Komponente i), mindestens einer Polyenverbindung, wobei die Polyenverbindung 2 bis 6 Vinylgruppen und ein Äquivalentgewicht pro Vinylgruppe von bis zu 500 aufweist; und
    iii) 0,001 bis 0,2 Gewichtsprozent, bezogen auf das Gewicht der Komponente i), mindestens eines Radikalinitiators; und

    II. Reagieren der geschmolzenen Mischung bei einer Temperatur, die ausreicht, um Komponente iii) zu zersetzen und mindestens einen Teil des linearen Poly(meso-lactids) zu verzweigen, um ein verzweigtes Poly(meso-lactid) mit einem absoluten Z-mittleren Molekulargewicht von mindestens 2.000.000 g/mol und einer Gelzahl von weniger als 25.000, gemessen in einer dicken Folie von 48 $in^2$ (309,7 $cm^2$) und 8 mil (0,2 mm), zu herstellen;

    wobei die relative Viskosität, das absolute gewichtsmittlere Molekulargewicht (Mw) und das absolute Z-mittlere Molekulargewicht (Mz) wie in der Beschreibung angegeben gemessen werden.

2. Verfahren nach Anspruch 1, wobei das mindestens eine Poly(meso-lactid) eine relative Viskosität von mindestens 2,5, ein absolutes gewichtsmittleres Molekulargewicht (Mw) von mindestens 140.000 g/mol und ein absolutes Z-mittleres Molekulargewicht (Mz) von mindestens 200.000 g/mol und höchstens 400.000 g/mol aufweist.

3. Verfahren nach Anspruch 1 oder 2, wobei die Polyenverbindung eine oder mehrere der folgenden Verbindungen ist: 1,4-Butandioldiacrylat, 1,5-Pentandioldiacrylat, 1,6-Hexandioldiacrylat, Neopentylglykoldiacrylat, Diethylenglykoldiacrylat, Triethylenglykoldiacrylat, Tetraethylenglykoldiacrylat, Polyethylenglykoldiacrylat, Dipropylenglykoldiacrylat, Tripropylenglykoldiacrylat, Cyclohexandimethanoldiacrylat, alkoxyliertes Hexandioldiacrylat, Neopentylglykoldiacrylat, propoxyliertes Neopentylglykoldiacrylat, Trimethylolpropantriacrylat, ethoxyliertes Trimethylolpropantriacrylat, propoxyliertes Trimethylolpropantriacrylat, Glycerintriacrylat, ethyloxyliertes und/oder propoxyliertes Glycerintriacrylat, Pentaerythritoldi-, -tri- oder - tetraacrylat, Erythritoldi-, -tri- oder -tetraacrylat, acryliertes Polyesteroligomer, Bisphenol-A-diacrylat, acryliertes Bisphenol-A-diglycidylether, ethoxyliertes Bisphenol-A-diacrylat, Tris(2-hydroxyethyl)isocyanurat-Triacrylat, ein acryliertes Urethan-Oligomer, 1,4-Butandiol-diallylether, 1,5-Pentandioldiallylether, 1,6-Hexandioldiallylether, Neopentylglykoldiallylether, Diethylenglykoldiallylether, Triethylenglykoldiallylether, Tetraethylenglykoldiallylether, Polyethylenglykoldiallylether, Dipropylenglykoldiallylether, Tripropylenglykoldiallylether, Cyclohexandimethanol-Diallylether, alkoxylierter Hexandiol-Diallylether, Neopentylglykol-Diallylether, propoxylierter Neopentylglykol-Diallylether, Trimethylolpropan-Di- oder - Triallylether, ethoxylierter Trimethylolpropan-Di- oder -Triallylether, propoxylierter Trimethylolpropan-Di- oder -Triallylether, Glycerin-Di- oder -Triallylether, ethoxylierter und/oder propoxylierter Glycerin-Di- oder -Triallylether, Pentaerythritol-Di-, -Tri- oder - Tetraallylether, Erythritol-Di-, -Tri- oder -Tetraallylether, acryliertes Polyesteroligomer, Bisphenol-A-Diacrylat, acryliertes Bisphenol-A-diglycidylether, ethoxyliertes Bisphenol-A-diallylether, Diallylmaleat, Diallylfumarat, Diallylphthalat, Diallylterephthalat, Diallylsuccinat, Di- oder Triallylcitrat, Triallylcyanurat und Triallylisocyanurat.

4. Verfahren nach einem der Ansprüche 1 bis 3, wobei der Radikalinitiator mindestens ein cyclisches Peroxid umfasst.

5. Verfahren nach einem der vorstehenden Ansprüche, wobei die Menge an Komponente ii) in der geschmolzenen Mischung 0,075 bis 0,25 Gewichtsprozent, bezogen auf das Gewicht des mindestens einen linearen Poly(meso-lactid)-Ausgangsstoffs, beträgt und die Menge an Komponente iii) in der geschmolzenen Mischung 0,02 bis 0,075

Gewichtsprozent, bezogen auf das Gewicht des linearen Poly(meso-lactid)-Ausgangsstoffs, beträgt.

**6.** Verfahren nach einem der vorstehenden Ansprüche, wobei Schritt II bei einer Temperatur von 150 °C bis 235 °C für einen Zeitraum von 15 bis 60 Sekunden durchgeführt wird.

**7.** Ein verzweigtes Poly(meso-lactid), wobei das Poly(meso-lactid) ein Copolymer aus 80 bis 100 % Meso-lactid und 0 bis 20 % L-lactid und/oder D-lactid ist, wobei das verzweigte Poly(meso-lactid) ein absolutes gewichtsmittleres Molekulargewicht (Mw) von mindestens 300.000 g/mol, eine Polydispersität von mindestens 3,5, eine Verzweigungszahl (Bn) von 5 bis 8, ein absolutes Z-mittleres Molekulargewicht (Mz) von mindestens 1.500.000 g/mol und eine Gelzahl von weniger als 20.000, gemessen in einer dicken Folio des verzweigten Poly(meso-lactids) von 48 $in^2$ (309,7 $cm^2$) und 8 mil (0,2 mm), aufweist;
wobei das absolute gewichtsmittlere Molekulargewicht (Mw), die Verzweigungszahl (Bn), das absolute Z-mittlere Molekulargewicht (Mz) und die Gelzahl wie in der Beschreibung angegeben gemessen werden.

**8.** Verzweigtes Poly(meso-lactid) nach Anspruch 7, das ein absolutes Molekulargewicht von mindestens 350.000 g/mol, eine Polydispersität von mindestens 4, eine Verzweigungszahl (Bn) von 5 bis 8, ein absolutes Molekulargewicht von mindestens 2.000.000 g/mol und eine Gelzahl von weniger als 20.000, gemessen in einer dicken Folie des verzweigten Poly(meso-lactids) von 48 $in^2$ (309,7 $cm^2$) und 8 mil (0,2 mm), aufweist.

**9.** Verzweigtes Poly(meso-lactid) nach Anspruch 7, das ein absolutes Mw von mindestens 500.000 g/mol, eine Polydispersität von mindestens 4, eine Verzweigungszahl (Bn) von 5 bis 8, ein absolutes Mz von mindestens 2.500.000 g/mol und eine Gelzahl von weniger als 20.000, gemessen in einer dicken Folie des verzweigten Poly(meso-lactids) von 48 $in^2$ (309,7 $cm^2$) und 8 mil (0,2 mm), aufweist.

**10.** Polylactidzusammensetzung, umfassend a) ein verzweigtes Poly(meso-lactid) nach einem der Ansprüche 7 bis 9 und b) mindestens ein lineares Polylactid.

**11.** Polylactidzusammensetzung nach Anspruch 10, umfassend 5 bis 50 Gew.-% a), bezogen auf das Gesamtgewicht von a) und b), und 50 bis 95 Gew.-% b) bezogen auf das Gesamtgewicht von a) und b).

## Revendications

**1.** Procédé de fabrication d'une composition de polylactide ramifié, comprenant les étapes de :

I. formation d'un mélange fondu de :

i) au moins un poly(méso-lactide) de départ, le au moins un poly(méso-lactide) étant un polymère contenant au moins 90% en masse d'unités lactide dont 80 à 100% sont du méso-lactide polymérisé et 0 à 20% sont des unités L-lactide et/ou D-lactide polymérisées, le au moins un poly(méso-lactide) de départ ayant une viscosité relative d'au moins 2,0, une masse moléculaire moyenne en masse absolue ($M_w$) d'au moins 100 000 g/mol, et une masse moléculaire moyenne de centrifugation absolue ($M_z$) d'au moins 150 000 g/mol et d'au plus 400 000 g/mol ; et
ii) 0,025 à 0,5% en masse, rapporté à la masse du composant i), d'au moins un composé polyène ayant de 2 à 6 groupes vinyle et une masse équivalente par groupe vinyle allant jusqu'à 500 ; et
iii) 0,001 à 0.2% en masse, rapporté à la masse du composant i), d'au moins un initiateur de radicaux libres ; et

II. reaction du mélange fondu à une temperature suffisante pour decomposer le composant iii) et ramifier au moins une partie du poly(méso-lactide) linéaire pour produire un poly(méso-lactide) ramifié ayant une masse moléculaire moyenne de centrifugation absolue d'au moins 2 000 000 g/mol et un nombre de gélification de moins de 25 000 tel que mesuré dans une feuille épaisse du poly(méso-lactide) ramifié de dimension 309.7 $cm^2$ (48 $in^2$), 0,2 mm (8 mil);

où la viscosité relative, la masse moléculaire moyenne en masse absolue ($M_w$) et la masse moléculaire moyenne de centrifugation absolue ($M_z$) sont mesurées comme indiqué dans la description.

**2.** Procédé selon la revendication 1 dans lequel le au moins un poly(méso-lactide) a une viscosité relative d'au moins 2,5, une masse moléculaire moyenne en masse absolue ($M_w$) d'au moins 140 000 g/mol, et une masse moléculaire

moyenne de centrifugation absolue ($M_z$) d'au moins 200 000 g/mol et d'au plus 400 000 g/mol.

3. Procédé selon la revendication 1 ou 2, dans lequel le composé polyène est un ou plusieurs de 1,4-butanediol diacrylate, 1,5-pentanediol diacrylate, 1,6-hexanediol diacrylate, néopentyl glycol diacrylate, diéthylène glycol diacrylate, triéthylène glycol diacrylate, tétraéthylène glycol diacrylate, polyéthylène glycol diacrylate, dipropylène glycol diacrylate, tripropylène glycol diacrylate, cyclohexane diméthanol diacrylate, hexanediol diacrylate alcoxylé, néopentyl glycol diacrylate, néopentyl glycol diacrylate propoxylé, triméthylolpropane triacrylate, triméthylolpropane triacrylate éthoxylé, triméthylolpropane triacrylate propoxylé, glycérine triacrylate, glycérine triacrylate éthoxylée et/ou propoxylée, pentaérythritol di-, tri-, ou tétraacrylate, érythritol di-, tri-, ou tétraacrylate, oligomère de polyester acrylé, bisphénol A diacrylate, diglycidyléther de bisphénol A acrylé, bisphénol A diacrylate éthoxylé, tris(2-hydroxyéthyl)isocyanurate triacrylate, oligomère uréthane acrylé, 1,4-butanediol diallyl éther, 1,5-pentanediol diallyl éther, 1,6-hexanediol diallyl éther, néopentyl glycol diallyl éther, diéthylène glycol diallyl éther, triéthylène glycol diallyl éther, tétraéthylène glycol diallyl éther, polyéthylène glycol diallyl éther, dipropylène glycol diallyl éther, tripropylène glycol diallyl éther, cyclohexane diméthanol diallyl éther, hexanediol diallyl éther alcoxylé, néopentyl glycol diallyl éther, néopentyl glycol diallyl éther propoxylé, triméthylolpropane di- ou triallyl éther, triméthylolpropane di- ou triallyl éther ethoxylé, triméthylolpropane di- ou triallyl éther propoxylé, glycérine di- ou triallyl éther, glycerine di- ou triallyl éther éthoxylée et/ou propoxylée, pentaérythritol di-, tri-, ou tétraallyl éther, érythritol di-, tri-, ou tétraallyl éther, oligomère de polyester acrylé, bisphénol A diacrylate, bisphénol A diglycidyléther acrylé, bisphénol A diallyl éther éthoxylé, diallyl maléate, diallyl fumarate, diallyl phtalate, diallyl téréphtalate, diallyl succinate, di- ou triallyl citrate, triallyl cyanurate, et triallyl isocyanurate.

4. Procédé selon l'une des revendications 1-3, dans lequel l'initiateur de radicaux libres contient au moins un peroxyde cyclique.

5. Procédé selon l'une des revendications précédentes, dans lequel la quantité de composant ii) dans le mélange fondu est de 0,075 à 0,25% en masse, rapportée à la masse du au moins un poly(méso-lactide) linéaire de départ et la quantité du composant iii) dans le mélange fondu est de 0,02 à 0,075% en masse, par rapport à la masse du au moins un poly(méso-lactide) linéaire de départ.

6. Procédé selon l'une des revendications précédentes, dans lequel l'étape II est réalisé à une température de 150°C à 235°C pendant une durée de 15 à 60 secondes.

7. Poly(méso-lactide) ramifié, le poly(méso-lactide) étant un copolymère de 80 à 100% de méso-lactide et de 0 à 20% de L-lactide et/ou D-lactide, le poly(méso-lactide) ramifié ayant une masse moléculaire moyenne en masse absolue ($M_w$) d'au moins 300 000 g/mol, une polydispersité d'au moins 3,5, un nombre de ramification ($B_n$) de 5 à 8, une masse moléculaire moyenne de centrifugation absolue d'au moins 1 500 000 g/mol, et un nombre de gélification de moins de 20 000 tel que mesuré dans une feuille épaisse du poly(méso-lactide) ramifié de dimension 309.7 $cm^2$ (48 $in^2$), 0,2 mm (8 mil) ;
où la masse moléculaire moyenne en masse absolue ($M_w$), le nombre de ramification (Bn), la masse moléculaire moyenne de centrifugation absolue ($M_z$) et le nombre de gélification sont mesurés comme indiqué dans la description.

8. Poly(méso-lactide) ramifié selon la revendication 7 qui a une $M_w$ absolue d'au moins 350 000 g/mol, une polydispersité d'au moins 4, un nombre de ramification ($B_n$) de 5 à 8, une $M_z$ absolue d'au moins 2 000 000 g/mol, et un nombre de gélification de moins de 20 000 tel que mesuré dans une feuille épaisse du poly(méso-lactide) ramifié de dimension 309.7 $cm^2$ (48 $in^2$), 0,2 mm (8 mil).

9. Poly(méso-lactide) ramifié selon la revendication 7 qui a une $M_w$ absolue d'au moins 500 000 g/mol, une polydispersité d'au moins 4, un nombre de ramification ($B_n$) de 5 à 8, une $M_z$ absolue d'au moins 2 500 000 g/mol, et un nombre de gélification de moins de 20 000 tel que mesuré dans une feuille épaisse du poly(méso-lactide) ramifié de dimension 309.7 $cm^2$ (48 $in^2$), 0,2 mm (8 mil)

10. Composition de polylactide comprenant a) un poly(méso-lactide) ramifié selon l'une des revendications 7-9 et b) au moins un polylactide linéaire.

11. Composition de polylactide selon la revendication 10 comprenant 5 à 50% en masse de a), rapporté aux masses combinées de a) et b), et 50 à 95% en masse de b), rapporté aux masses combinées de a) and b).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5359206 A
- WO 2002100921 A
- US 5210108 A
- US 5225521 A
- GB 2277324 A
- EP 632081 A
- WO 2006002372 A
- US 5594095 A
- US 5798435 A
- US 8334348 B
- WO 2019152264 A
- US 5247059 A
- US 5258488 A
- US 5274073 A
- US 9527967 B


### Non-patent literature cited in the description


- **YANG et al.** Thermal and Mechanical Properties of Chemical Crosslinked Polylactide (PLA). *Polymer Testing*, 2008, vol. 27, 957-963